# EUROPEAN PATENT SPECIFICATION

(11) **EP 4 343 297 B1**
(45) Date of publication and mention of the grant of the patent: **03.12.2025**
(21) Application number: 23198059.0
(22) Date of filing: 18.09.2023
(51) Int. Cl.: G01L 5/04, G01L 5/102

(54) **CABLE TENSIOMETER**
KABELTENSIOMETER
TENSIOMÈTRE DE CÂBLE

(30) Priority: 21.09.2022 IT 202200019323
(43) Date of publication of application: 27.03.2024
(73) Proprietor: TLB Service S.r.l., 45026 Lendinara (Rovigo) (IT)
(72) Inventor: BERNACCHIA, Gianmaria, Tavernelle (PG) (IT); CARLINI, Natascia, Spoleto (PG) (IT); GELATI, Fabio, Perugia (PG) (IT); ROSELLI, Luca, Perugia (PG) (IT); RAIMONDI, Silvio, Lendinara (RO) (IT)
(74) Representative: Lunati & Mazzoni S.r.L.

(56) References cited:
- GB-A- 488 088
- JP-B2- 7 074 043

## Description

The present invention relates to a tensiometer for cables, preferably made of metal and more preferably of steel, of the type specified in the preamble of first claim. In particular the device is configured to monitor the tension of cables usable, for example, in the safety field for (vertical or lifeline) fall-arrest systems and for stays or other elements characterized by the adoption of suitably metal cable.

As it is known nowadays, many tensioned (that is stretched) cable devices are known, that is devices which provide and then exploit a cable under tension (stretched) for example for safety or structural reasons. A first example of such devices is identified by those used to allow an operator to work safely which can be identified, for example, in lifeline or vertical fall-arrest systems. Alternatively, another example of tensioned cable devices can be identified in stays, tie rods or other structural elements configured to keep in correct position a structure such as a bridge, a wall, a radiant system or a tower.

Such tensioned cable devices provide metal cables constrained at the ends and a tensioner defining the correct tension of the cable.

The cables have mostly rectilinear course, but in some cases they may have curves, they may cross with other lines, they may follow the course of a ridge pole or the articulated course of a wall.

The tensioner consists of a threaded sleeve with opposite threads at the two ends, and two tie rods constrained to the cable each one thereof engaged at one end so that the sleeve, by rotating, brings the ties rods closer or further away and then it allows to adjust the tension of the cable.

In case the cable is particularly long, the tensioned cable devices may have one or more section-breaking anchors having a hole passing through the cable so as to keep the cable in position.

The described known art comprises some important drawbacks.

In particular, the known tensioned cable devices have high installation and management costs. In fact, the cable de-tensioning occurs due to accidental damage, atmospheric agents and, although with less impact, due to deterioration of the cable, of the tensioner or of other elements of the system. Moreover, due to de-tensioning, they require a periodic check of the cable tension in order to guarantee their correct operation (required safety and/or capability of keeping the structure in correct position). Such operation results to be complex and then difficult to be performed and moreover it requires relatively frequent and expensive monitoring of the cable state.

In order to solve this drawback some tensioned cable devices provide a tensiometer which eases monitoring the tension, but it determines an increase in the device costs and installation complexity. Such tensiometer consists of a usually elastic device, arranged along the cable axis and configured to lengthen depending upon the cable tension. Based upon the tensiometer lengthening, the cable tension is detected.JP 707 4043 B2 discloses an installation condition detection apparatus for estimating the tensile-strength of the whole cable.

The known tensiometers have important drawbacks.

A first important drawback is represented by the fact that the known tensiometers, in order to be installed, require particular and laborious procedures. It is highlighted that in the known tensiometers often measurement errors occur due to the not correct installation of the tensiometer itself.

Moreover, the currently available tensiometers result to be relative expensive and therefore poorly used with consequent increased risks for the operator.

At last, it is highlighted that an additional example of tensiometers consists of a fixed body to be constrained to the cable, and a movable body cantileverly constrained to the fixed body. In this case a force normal to the cable is applied to the movable body and then the tension is identified depending upon the intensity of said force required to cause a bending in the cable.

This last example of tensiometer, too, is poorly used since it is imprecise and, above all, since the tension measurement is performed by increasing the loads and then by stressing the cable.

In this situation the technical task underlying the present invention is to devise a tensiometer capable of obviating substantially at least part of the mentioned drawbacks.

Within said technical task, an important object of the invention is to obtain a tensiometer capable of verifying, in a simple and quick way, the tension of a cable preferably made of metal and in particular made of steel.

Another important object of the invention is to implement a tensioned cable device wherein it is simple to monitor the cable tensioning and which then does not require a frequent monitoring.

The technical task and the specified objects are achieved by a tensiometer as claimed in enclosed claim 1. Examples of preferred embodiments are described in the depending claims.

The features and the advantages of the invention are explained hereinafter by the detailed description of preferred embodiments of the invention, with reference to the enclosed drawings, wherein:
**Figure 1** shows a tensiometer according to the invention associated to a cable;
**Figure 2** illustrates the tensiometer according to the invention; and
**Figure 3** highlights a tensioned cable device providing a tensiometer according to the invention.

In the present document, the measurements, values, shapes and geometrical references (such as perpendicularity and parallelism), when associated to words such as "about" or other similar terms such as "approximately" or "substantially", are to be meant as excluding measurements errors or inaccuracies due to production and/or manufacturing errors and, above all, excluding a slight deviation from the value, measurement, shape or geometrical reference thereto it is associated. For example, such terms, if associated to a value, preferably designate a divergence not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise designated, "perpendicular", "transversal", "parallel" or "normal" or other terms of geometric positioning between geometric elements (for example axes, directions and straight lines) are to be meant with reference to their mutual geometric position between the corresponding projections. Said projections are defined on one single plane parallel to the one(s) in which said geometric elements lie.

The measurements and data reported in the present text are to be considered, unless otherwise indicated, as performed under International Standard Atmosphere ICAO (ISO 2533:1975).

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical, such as electronic quantities of registers of a computer system and/or memories in other data similarly represented as physical quantities within computer systems, registers or other devices for storing, transmitting or displaying information.

With reference to Figures, the tensiometer according to the invention is designated as a whole with number **1.**

It is configured to measure the tension of a cable **11** preferably made of metal (in particular made of steel) and more preferably a cable 11 usable, for example, of a tensioned cable device **10** of cable 11.

In this document the expression "tensioned cable device" identifies any device capable of exploiting a cable 11 under tension and then stretched. The tensioned cable device 10 can be a safety device, for example, for (vertical or lifeline) fall-arrest systems and a device having a structural function such as a stay or a tie rod. The cable 11 is stretched and then under tension.

It can define a longitudinal axis **11a** preferably transversal and, in detail, normal to the gravitational gradient.

The tension of cable 11 identifies a force along the axis 11a.

The tensiometer 1 includes a weight **2** configured to be constrained to the cable 11 so as to allow the weight 2 to move depending upon a variation in tension of cable 11.

The weight 2 can define an axis of preferred extension **2a** suitably barycentric to the weight 2.

In detail, the weight 2 is constrained to cable 11 so that a variation in tension of cable 11 causes a motion of the weight 2. Therefore, the weight 2 is constrained to the cable 11 so that a variation and in particular a decrease in the tension of cable 11 (for example a bending) determines a motion of the weight 2.

The weight 2 is constrained rotationally labile to cable 11 so as to allow the weight 2 to rotate idly with respect to cable 11 depending upon the force of gravity. Suitably the weight 2 is constrained to cable 11 so as not to translate with respect to the same cable and to rotate exclusively idly with respect to cable 11.

Therefore in use, that is the weight 2 being constrained to cable 11, the weight 2 can rotate, preferably exclusively, with respect to cable 11 by placing the axis 2a approximately parallel to the gravitational axis independently from the position and/or tension of cable 11 and for example perpendicularly to the longitudinal axis 11a.

To this purpose the tensiometer 1 can include a ball joint **3** configured to constrain the weight 2 to cable 11 by allowing, suitably in an exclusive way, said mutual rotation between weight 2 and cable 11.

The tensiometer 1 includes a detector 4 movable with respect to the weight 2 and to cable 11 so as to allow suitably to have a relative motion between weight 2 and detector 4 in response to a variation in the tension of cable 11.

The detector 4 is preferably separated physically from weight 2 and cable 11.

The detector 4 is configured to detect the position of the weight 2 with respect to the same detector 4, i.e. the distance and more precisely a variation in distance of the weight 2 of the detector 4. It identifies a reference system of the position of the weight 2 with respect to the detector 4 and in particular it defines a, suitably absolute, reference system, of the position of the weight 2 and then of the distance of the weight 2 from the same detector 4. To this purpose, the detector 4 for example can be constrained to ground.

The tensiometer 1 can include, integrally to the weight 2, an emitter **5** of an emission and the detector 4 comprises at least a transducer detecting said emission by allowing to measure the distance and in particular the variations in distance between weight 2 and detector 4, that is between emitter 5 and detector 4.

Each transducer is configured to emit a signal depending upon the received emission and then upon the distance between transducer and emitter 5.

Preferably the detector 4 comprises at least a central transducer **41,** suitably only one, and one or more transducers **42** lateral to the central transducer 41.

Suitably the axis of preferred extension 2a can pass through the central transducer 41.

The transducers 41 and 42 can substantially lie on a same plane suitably transversal and, in detail, normal to the axis of preferred extension 2a.

The central transducer 41 can be approximately overlapped gravitationally (that is along the gravitational gradient) to the weight 2 and to the emitter 5 at least in use. The transducers 41 and 42 are spaced apart to each other preferably equally. In detail, the distance of the central transducer 41 from one or more lateral transducers 42 is approximately at least equal to 1 cm and in detail to 2 cm.

In particular the detector 4 comprises at least two lateral transducers 42 defining the and preferably the central transducer 41 is equidistant from the lateral transducers 42. The central transducer 41 then is suitably placed between the lateral transducers 42.

In detail, the at least two lateral transducers 42 define/delimit an area (a segment in case of two lateral transducers 42) and the central transducer 41 is in said area (along said segment in case of two lateral transducers 42).

More particularly, it comprises at least three lateral transducers 42 defining the vertices of a polygon and suitably the central transducer 41 is in the centre of gravity of said polygon. In a preferred embodiment the detector 4 comprises four lateral transducers 42 defining the vertices of a quadrilateral (such as a rhombus or preferably a square) and the central transducer 41 which can be in the centre of gravity of said square. The distance between central transducer 41 and each lateral transducer 42 can be equal to 1 cm.

In use, the transducers 41 and 42 and then the polygon can define a plane normal to the gravitational axis, in detail parallel to the longitudinal axis 11a.

Preferably the emission is magnetic and then the emitter 5 can include a magnet and one or more transducers 41 and/or 42 are configured to detect said magnetic emission.

The emitter 5 can be a neodymium magnet.

The emitter 5 can be in one piece with the weight 2.

Each one of one or more transducers 41 and/or 42 can be a Hall sensor, radar, lidar, laser or other proximity sensor.

The tensiometer 1 includes a control unit 6 configured to define the tensioning of said cable 11 depending upon the distance and in particular upon variations of said distance between weight 2 (then emitter 5) and detector 4.

The control unit 6 is configured to determine the tension of cable 11 depending upon the distance (to be precise, upon the variation in the distance) of the weight 2 and then of the emitter 5 with respect to the central transducer 41.

The control unit 6 can be configured to define a detection configuration and a non-detection configuration. The detection configuration is present when the cable 11 is still by allowing the precise measurement of the tension of cable 11; and the non-detection configuration is present when the cable 11 is not still by preventing the tension from being measured. Only in the detection configuration the unit determines the tension of cable 11.

Preferably, the unit 6 can be configured to define the detection or non-detection configuration depending upon the variation in distance between weight 2 and one or more lateral transducers 42. In particular, it defines the detection configuration if there are variations in distance between weight 2 and each lateral transducer 42 lower than an acceptability threshold; and the non-detection if at least one of said variations in distance is at least equal to said acceptability threshold.

The control unit 6 can include a signaller configured to emit a (for example optical and/or acoustic) alarm signal in case of detection of a tension lower than a limit tension and then of an excessive decrease in tension at cable 11. In particular the signaller can include a transmitter, for example a wireless transmitter, configured to send to an external processor a control for emitting said alarm signal.

At last, the tensiometer 1 can include a power supply of the same tensiometer 1 and in particular of the unit 6 and of the detector 4.

The tensiometer 1 can be part of a tensioned cable device 10.

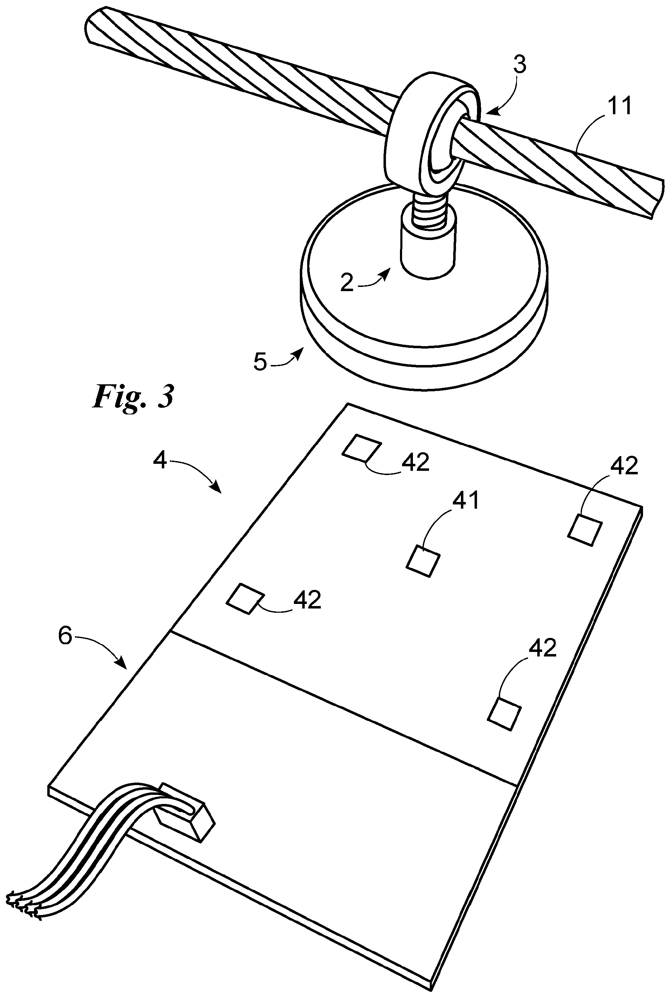

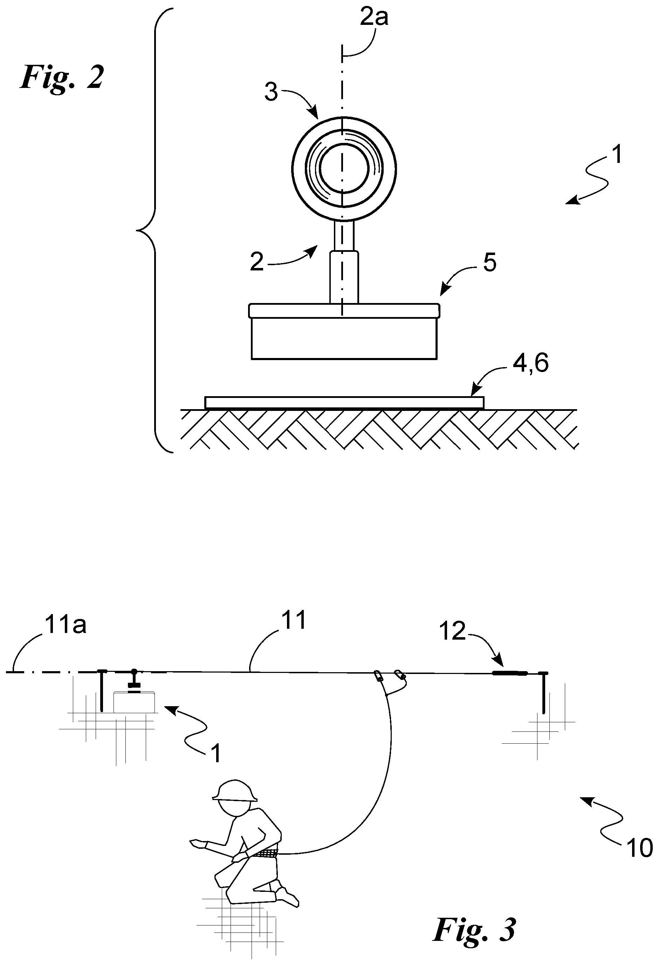

As said above, such tensioned cable device 10 can be a safety device (Figure 3) and then configured to allow to work safely and thereto an operator can constrain through suitable safety equipment (such as harnesses and cords), for example, to avoid falls. Alternatively, it can be identified in a stay or other device (usable for example in the naval or civil sector) exploiting a cable 11 under tension to sustain/stiffen construction elements usually to avoid the inflection or deformation thereof.

The tensioned cable device 10 can include at least a cable 11 and, for each cable 11, at least a tensiometer 1 for measuring the tension of said cable 11.

The cable 11 can define a path therealong, in case of safety, an operator, by constraining through said safety equipment, can move safely by remaining constrained to the device 10 thanks to said safety equipment.

In use the cable 11 can be stretched and define a working tension. The working tension can be substantially at least equal to 500 N, in detail substantially comprised between 500N and 1500N and, for example, substantially equal to 1000N.

The cable 11 can be made of metal and in particular made of steel.

In some cases, the path of cable 11 can define a broken line or polyline and then the cable 11 can identify a finished and ordered set of segments of cable 11 oriented in ordered and consecutive way. To this purpose the tensioned cable device 10 can include at least a deviator configured to vary the development direction of the path. The deviator 12 can be of known type. In this case the cable 11 can define several axes 11a.

The tensioned cable device 10 can include for each cable 11 at least a tensioner **12** of cable 11 suitably defining said working tension of cable 11.

The tensioner 12 can be of known type.

The operation of the tensiometer 1 and in particular of the tensioned cable device 10, described previously, in structural terms is the following. Such operation defines a new process for monitoring the tension of a cable 11.

It is highlighted that in the description the process/operation are described in association to the tensioned cable device 10 but they can be applied even to any other cable 11 under tension.

The monitoring process comprises a tensioning step wherein the cable 11 is placed under tension and in detail under working tension.

In the tensioning step the tensioned cable device 10 can be assembled. The assembly of the device 10 is of known type.

Once finished the tensioning step, the monitoring process provides an installation step of the tensiometer 1.

The installation step includes a constraining sub-step in which the weight 2 and then the emitter 5 are constrained to the cable 11; and subsequently a positioning sub-step of the detector 4 near the weight 2 and suitably the emitter 5.

In this sub-step, by suitably exploiting the ball joint 3, the weight 2 and then the emitter 5 are constrained to cable 11 in rotationally idle motion so that, moved by the force of gravity, the weight 2 rotates idly with respect to cable 11 by arranging the axis of preferred extension 2a substantially parallel to the gravitational axis independently from the position and/or tension of cable 11.

The weight 2 and then the emitter 5 can be constrained to cable 11 and they can be placed at a distance from an end of cable suitably at least equal to 1 cm and in detail to 10 cm. In a not limiting preferred example said distance can be 25 cm, whereas in a second example the weight 2 and then the emitter 5 can be constrained to cable 11 at the centre of cable 11 calculated along the axis 11a.

In the positioning sub-step, the detector 4 is constrained near and, for example below (with respect to the gravitational gradient) the weight 2 and suitably the emitter 5. In detail, it can be constrained, preferably integrally, to an external body (for example to the ground) below the cable 11 at the weight 2 and the emitter 5. In particular, by exploiting one or more lateral transducers 42, the weight 2 and the emitter 5 are overlapped to the central transducer 41 suitably with respect to the gravitational gradient.

In particular the unit 6 detects the correct positioning of the emitter 5 if receives from each lateral transducer 42 a signal of substantially same entity.

At the end of the positioning sub-step, the axis of preferred extension 2a passes through the central transducer 41.

At last, the installation step can provide a register sub-step, in which the optimum distance of the weight 2 with respect to the central transducer 41, when the cable 11 is at the working tension, is registered.

At this point, the monitoring process provides a step for measuring the tension of cable 11 and in particular the variations in the tension of cable 11 with respect to the working tension suitably defined in the tensioning step.

The measuring step can include a verification sub-step wherein the control unit 6 defines a detection or non-detection configuration and a measurement sub-step of the tension of cable 11.

In the verification sub-step, one or more lateral transducers 42 detect possible variations in distance with respect to the weight 2. If each one of such distance variations is lower than the acceptability threshold, the control unit 6 defines a detection configuration allowing to perform the measurement sub-step. Alternatively, if at least one of such distance variations is at least equal to the acceptability threshold, the unit 6 defines a non-detection configuration by preventing the measurement sub-step from being performed.

In the measurement sub-step, the current distance, that is at time of measurement, of the weight 2 with respect to the central transducer 41 is detected, depending upon the signal detected by the central transducer 41. In particular, possible distance variations are detected by comparing the current distance with the optimum distance.

The measuring step can include an evaluation sub-step of the current tension depending upon the current distance and in particular said distance variations.

If in the evaluation sub-step the control unit 6 determines that a tension is lower than a limit tension, it provides to send, for example through signaller, an alarm signal. Alternatively, if the unit 6 determines a tension at least equal to a limit tension, the cable 11 is safe and, for example, the operator can continue to exploit the tensioned cable device 10.

The tensiometer 1 and in particular the tensioned cable device 10 according to the invention obtain important advantages.

In fact, the tensiometer 1 allows to monitor in a precise and quick way variations in tension of a cable 11 and then to signal excessive decreases in said tension. Such aspect results to be particularly advantageous in a tensioned cable device 10 in which the operator safety is strongly linked to the correct tension of cable 11.

Another important advantage is represented by the fact that the installation of the tensiometer 1 is particularly quick and easy to be performed and, thanks to the use of the lateral transducers 42, is extremely precise by allowing precise measurements.

An advantage then lies in that the tensiometer 1 allows to measure precisely the tension of cable 11 and then to detect variations in tension even of small entity.

A not secondary advantage is represented by the reduced costs and high reliability of the tensiometer 1.

The invention can be subject to variations within the scope of the inventive concept defined by the claims.

## Claims

1. A tensiometer (1) for cables (11) under tension wherein it comprises
- a weight (2) configured to be constrained to said cable (11) so as to allow said weight (2) to move depending upon a variation in tension of said cable (11);
- a detector (4) movable with respect to said weight (2) and said cable (11) and configured to detect the distance between said weight (2) and said detector (4);
- a control unit (6) configured to define the tension of said cable (11) depending upon said distance of said weight (2) and said detector (4),
**characterized in that**
said weight (2) is configured to be rotationally labile constrained to said cable (11) so as to allow said weight (2) to rotate idly with respect to said cable (11) depending upon the force of gravity.

2. The tensiometer (1) according to claim 1 comprising an emitter (5) of an emission integral to said weight (2); and wherein said detector (4) comprises at least a transducer (41 42) detecting said emission by allowing to measure the distance depending upon said emission.

3. The tensiometer (1) according to claim 2, wherein said at least a transducer (41 42) comprises a central transducer (41) and at least two transducers (42) lateral with respect to said central transducer (41) and equidistant from said central transducer (41).

4. The tensiometer (1) according to at least one of claim wherein said control unit (6) is configured to define a detection configuration if there are variations in distance between said weight (2) and each one of lateral transducers (42) lower than an acceptability threshold; and the non-detection configuration if at least one of said variations in distance between said weight (2) and each one of the lateral transducers (42) is equal at least to said acceptability threshold; and wherein said control unit (6) defines the tension of said cable (11) depending upon said position of said weight (2) with respect to said central transducer (41) only in said detection configuration.

5. The tensiometer (1) according to at least one of claims 3-4, wherein said detector (4) comprises four lateral transducers (42) defining the vertices of a square; and wherein said central transducer (41) is in the centre of gravity of said square.

6. A tensioned cable device (10) comprising said cable (11) under tension and said tensiometer (1) according to at least a preceding claim.

7. A process for monitoring the tension of a cable (11) **characterized in that** it comprises
- a tensiometer (1) according to at least a preceding claim and
- an installation step of said tensiometer (1) comprising
∘ a constraining sub-step wherein said weight (2) is constrained to said cable (11) and
∘ a positioning sub-step wherein said detector (4) is constrained near said weight (2); and
- a measuring step wherein said detector (4) detects the distance between said weight (2) and said detector (4) and then said control unit (6) defines the tension of said cable (11) depending upon said distance between said weight (2) and said detector (4).

8. The monitoring process according to the preceding claim, wherein said tensiometer (1) comprises an emitter (5) of an emission integral to said weight (2); wherein said detector (4) comprises at least a transducer (41 42) detecting said emission by allowing to measure the distance depending upon said emission; and wherein said at least a transducer (41 42) comprises a central transducer (41) and at least two transducers (42) lateral with respect to said central transducer (41) and equidistant with respect to said central transducer (41); and wherein in said positioning sub-step said control unit (6) detects the correct positioning of said emitter (5) and then of said weight (2) if it receives from each lateral transducer (42) a signal substantially of the same magnitude.

9. The monitoring process according to claim 8, wherein said measuring step comprises a verification sub-step and a measurement sub-step of said tension of cable (11); wherein in said verification sub-step said control unit (6) defines a detection configuration if there are distance variations in distance between said weight (2) and each one of lateral transducers (42) lower than an acceptability threshold; and the non-detection configuration if at least one of said variations in distance between said weight (2) and each one of lateral transducers (42) is at least equal to said acceptability threshold; and wherein said control unit (6) defines the tension of said cable (11) depending upon said position of said weight (2) with respect to said central transducer only in said detection configuration; and wherein said control unit (6) controls said measurement sub-step only if it defines said detection configuration.

## Patentansprüche

1. Spannungsmesser (1) für Kabel (11), die unter Spannung stehen, wobei es umfasst:
- eine Waage (2), die dazu konfiguriert ist, mit dem Kabel (11) befestigt zu werden, um der Waage (2) zu erlauben, sich in Abhängigkeit von einer Spannungsänderung des Kabels (11) zu bewegen;
- einen Detektor (4), der in Bezug auf die Waage (2) und das Kabel (11) beweglich ist und der dazu konfiguriert ist, den Abstand zwischen der Waage (2) und dem Detektor (4) zu erkennen;
- eine Steuereinheit (6), die dazu konfiguriert ist, die Spannung des Kabels (11) in Abhängigkeit von dem Abstand zwischen der Waage (2) und dem Detektor (4) zu definieren,
**dadurch gekennzeichnet, dass**
die Waage (2) dazu konfiguriert ist, zeitweilig drehbar mit dem Kabel (11) befestigt zu werden, sodass der Waage (2) zu erlauben, im Leerlaufzustand in Bezug auf das Kabel in Abhängigkeit von der Schwerkraft zu drehen

2. Spannungsmesser (1) nach Anspruch 1, umfassend einen Emitter (5) einer Messwerte-Ausgabe, die in der Waage (2) integriert wird; und wobei der Detektor (4) mindestens einen Messgeber (41 42) umfasst, der die Messwerte-Ausgabe erkennt, indem er erlaubt, den Abstand in Abhängigkeit von der Messwerte-Ausgabe zu messen.

3. Spannungsmesser (1) nach Anspruch 2,
wobei mindestens ein
Messgeber (41 42) einen Zentralmessgeber (41) und mindestens zwei Messgeber (42) umfasst, die seitlich in Bezug auf den Zentralmessgeber (41) und abstandsgleich von dem Zentralmessgeber (41) angeordnet sind.

4. Spannungsmesser (1) nach mindestens einem der vorhergehenden Ansprüche,
wobei die Steuereinheit (6) dazu konfiguriert ist, eine Erkennungskonfiguration zu definieren, wenn Abstandsänderungen zwischen der Waage (2) und jedem der seitlichen Messgeber (42) vorhanden sind, die kleiner als ein Annehmbarkeitsschwellenwert sind; und die Nichterkennungskonfiguration zu definieren, wenn mindestens eine der Abstandsänderungen zwischen der Waage (2) und jedem der seitlichen Messgeber (42) mindestens einem Annehmbarkeitsschwellenwert gleich ist; und wobei die Steuereinheit (6) die Spannung des Kabels (11) in Abhängigkeit von der Position der Waage (2) in Bezug auf den Zentralmessgeber (41) nur in der Erkennungskonfiguration definiert.

5. Spannungsmesser (1) nach mindestens einem der vorhergehenden Ansprüche,
wobei der Detektor (4) vier seitliche Messgeber (42) umfasst, die die Scheitel eines Vierecks definieren; und wobei sich der Zentralmessgeber (41) in dem Schwerpunkt des Vierecks befindet.

6. Unter Spannung stehende Kabelvorrichtung (10), umfassend das Kabel (11), das unter Spannung steht und das Spannungsmesser (1) nach mindestens einem der vorhergehenden Ansprüche.

7. Verfahren zur Überwachung der Spannung eines Kabels (11), **dadurch gekennzeichnet, dass** es umfasst
- ein Spannungsmesser (1) nach mindestens einem der vorhergehenden Ansprüche und
- einen Installationsschritt des Spannungsmessers (1), umfassend
∘ einen Befestigungsunterschritt wobei die Waage (2) mit dem Kabel (11) befestigt wird und
∘ einen Positionierungsschritt, wobei der Detektor (4) in der Nähe der Waage (2) befestigt wird; und
- einen Messschritt, wobei der Detektor (4) den Abstand zwischen der Waage (2) und dem Detektor (4) misst und wobei die Steuereinheit (6) dann die Spannung des Kabels (11) in Abhängigkeit von dem Abstand zwischen der Waage (2) und dem Detektor (4) definiert.

8. Überwachungsverfahren nach dem vorhergehenden Anspruch,
wobei das Spannungsmesser (1) einen Emitter (5) einer Messwerte-Ausgabe umfasst, die in der Waage (2) integriert wird; wobei der Detektor (4) mindestens einen Messgeber (41 42) umfasst, der die Messwerte-Ausgabe erkennt, indem er erlaubt, den Abstand in Abhängigkeit von der Messwerte-Ausgabe zu messen; und wobei mindestens ein Messgeber (41 42) einen Zentralmessgeber (41) und mindestens zwei Messgeber(42) umfasst, die seitlich in Bezug auf den Zentralmessgeber (41) und gleichabstand von dem Zentralmessgeber (41) angeordnet sind; und wobei in dem Positionierungsunterschritt die Steuereinheit (6) die korrekte Positionierung des Emitters (5) und somit der Waage (2) erkennt, wenn sie von jedem seitlichen Messgeber (42) ein Signal mit im Wesentlichen gleicher Amplitude empfängt.

9. Überwachungsverfahren nach Anspruch 8,
wobei der Messschritt einen Prüfungsunterschritt und einen Messunterschritt der Spannung des Kabels (11) umfasst; wobei in dem Prüfungsunterschritt die Steuereinheit (6) eine Erkennungskonfiguration definiert, wenn Abstandsänderungen zwischen der Waage (2) und jedem der seitlichen Messgeber (42) vorhanden sind, die kleiner als ein Annehmbarkeitsschwellenwert sind; und die Nichterkennungskonfiguration definiert, wenn mindestens eine der Abstandsänderungen zwischen der Waage (2) und jedem der seitlichen Messgeber (42) mindestens dem Annehmbarkeitsschwellenwert gleich ist; und
wobei die Steuereinheit (6) die Spannung des Kabels (11) in Abhängigkeit von der Position der Waage (2) in Bezug auf den Zentralmessgeber nur in der Erkennungskonfiguration definiert und wobei die Steuereinheit (6) den Messunterschritt steuert nur wenn sie die Erkennungskonfiguration definiert.

## Revendications

1. Un tensiomètre (1) pour câbles (11) sous tension, lequel comprend
- un poids (2) configuré pour être contraint audit câble (11) de manière à permettre audit poids (2) de se déplacer en fonction d'une variation de la tension dudit câble (11) ;
- un détecteur (4) mobile par rapport audit poids (2) et audit câble (11) et configuré pour détecter la distance entre ledit poids (2) et ledit détecteur (4) ;
- une unité de contrôle (6) configurée pour définir la tension dudit câble (11) en fonction de ladite distance entre ledit poids (2) et ledit détecteur (4),
**caractérisé en ce que**
ledit poids (2) est configuré pour être contraint de manière rotatoirement labile audit câble (11) de manière à permettre audit poids (2) de tourner librement par rapport audit câble (11) en fonction de la force de gravité.

2. Le tensiomètre (1) selon la revendication 1, comprenant un émetteur (5) d'une émission intégrée audit poids (2) ; et dans lequel ledit détecteur (4) comprend au moins un transducteur (41 42) détectant ladite émission en permettant de mesurer la distance en fonction de ladite émission.

3. Le tensiomètre (1) selon la revendication 2,
**dans lequel** ledit au moins un transducteur (41 42) comprend un transducteur central (41) et au moins deux transducteurs (42) latéraux par rapport audit transducteur central (41) et équidistants dudit transducteur central (41).

4. Le tensiomètre (1) selon au moins une des revendications précédentes, dans lequel ladite unité de contrôle (6) est configurée pour définir une configuration de détection s'il y a des variations de distance entre ledit poids (2) et chacun des transducteurs latéraux (42) inférieures à un seuil d'acceptabilité ; et la configuration de non-détection si au moins une desdites variations de distance entre ledit poids (2) et chacun des transducteurs latéraux (42) est au moins égale audit seuil d'acceptabilité ; et dans lequel ladite unité de contrôle (6) définit la tension dudit câble (11) en fonction de ladite position dudit poids (2) par rapport audit transducteur central (41) uniquement dans ladite configuration de détection.

5. Le tensiomètre (1) selon au moins une des revendications précédentes, dans lequel ledit détecteur (4) comprend quatre transducteurs latéraux (42) définissant les sommets d'un carré ; et dans lequel ledit transducteur central (41) est au centre de gravité dudit carré.

6. Dispositif à câble tendu (10) comprenant ledit câble (11) sous tension (10) et ledit tensiomètre (1) selon au moins une revendication précédente.

7. Un procédé pour surveiller la tension d'un câble (11), **caractérisé en ce qu'il** comprend
- un tensiomètre (1) selon au moins une revendication précédente et
- une étape d'installation dudit tensiomètre (1) comprenant
∘ une sous-étape de contrainte das laquelle ledit poids (2) est contraint audit câble (11) et
∘ une sous-étape de positionnement dans laquelle ledit détecteur (4) est contraint à proximité dudit poids (2) ; et
- une étape de mesure dans laquelle ledit détecteur (4) détecte la distance entre ledit poids (2) et ledit détecteur (4) et puis ladite unité de contrôle (6) définit la tension dudit câble (11) en fonction de ladite distance entre ledit poids (2) et ledit détecteur (4).

8. Le procédé de surveillance selon la revendication précédente,
dans lequel ledit tensiomètre (1) comprend un émetteur (5) d'une émission intégrée audit poids (2) ; dans lequel ledit détecteur (4) comprend au moins un transducteur (41 42) détectant ladite émission en permettant de mesurer la distance en fonction de ladite émission ; et dans lequel ledit au moins un transducteur (41 42) comprend un transducteur central (41) et au moins deux transducteurs (42) latéraux par rapport audit transducteur central (41) et équidistants par rapport audit transducteur central (41) ; et dans lequel, dans ladite sous-étape de positionnement, ladite unité de contrôle (6) détecte le positionnement correct dudit émetteur (5) et donc dudit poids (2) si elle reçoit de chaque transducteur latéral (42) un signal sensiblement de la même amplitude.

9. Le procédé de surveillance selon la revendication 8,
dans lequel ladite étape de mesure comprend une sous-étape de vérification et une sous-étape de mesure de ladite tension du câble (11) ; dans lequel, dans ladite sous-étape de vérification, ladite unité de contrôle (6) définit une configuration de détection s'il y a des variations de distance entre ledit poids (2) et chacun des transducteurs latéraux (42) inférieures à un seuil d'acceptabilité ; et la configuration de non-détection si au moins une desdites variations de distance entre ledit poids (2) et chacun des transducteurs latéraux (42) est au moins égale audit seuil d'acceptabilité ; et dans lequel ladite unité de contrôle (6) définit la tension dudit câble (11) en fonction de ladite position dudit poids (2) par rapport audit transducteur central uniquement dans ladite configuration de détection ; et
dans lequel ladite unité de contrôle (6) commande ladite sous-étape de mesure uniquement si elle définit ladite configuration de détection.
